# FASCICULE DE BREVET EUROPEEN

(11) **EP 1 577 160 B1**
(45) Date de publication et mention de la délivrance du brevet: **10.01.2007**
(21) Numéro de dépôt: 04292607.1
(22) Date de dépôt: 03.11.2004
(51) Int. Cl.: B60Q 1/04, B60R 21/34

(54) **Dispositif de fixation d'un bloc optique sur la structure d'un véhicule automobile, intégrant des moyens d'amortissement d'un choc piéton**
Vorrichtung zur Befestigung einer optischen Einheit mit Stossfängern für einen Fussgängeraufprall
Fixing device for an optical unit comprising shock absorbers for a pedestrian impact

(30) Priorité: 18.03.2004 FR 0402807
(43) Date de publication de la demande: 21.09.2005
(73) Titulaire: Peugeot Citroën Automobiles S.A., 78140 Vélizy Villacoublay (FR)
(72) Inventeur: Gaussin, Elsa, 94550 Chevilly Larue (FR)
(74) Mandataire: Thinat, Michel

(56) Documents cités:
- DE-A- 10 143 676
- DE-A- 19 732 301
- US-A- 4 070 051

## Description

L'invention concerne en général les blocs optiques de véhicule automobile.

Plus précisément, l'invention concerne un dispositif de fixation d'un bloc optique sur la structure d'un véhicule automobile, ce dispositif comprenant au moins une glissière solidaire du bloc optique et une patte fixée sur un élément de structure du véhicule et engagée dans la glissière, le bloc optique étant apte à se déplacer longitudinalement vers l'arrière en cas de choc sur l'avant du véhicule par glissement de la glissière contre la patte.

Des dispositifs de ce type sont connus de l'art antérieur, et notamment du document de brevet FR 2 837 438, qui décrit un dispositif de montage dont la glissière présente une forme générale rectiligne. La glissière s'étend dans un plan horizontal, longitudinalement ou suivant une direction inclinée d'un angle α par rapport à la direction longitudinale. Cette glissière comprend une portion de largeur réduite, de telle sorte que, en cas de choc piéton à l'avant du véhicule, la glissière est soumise à un effort résistant dans son déplacement vers l'arrière par rapport à la patte. Cette résistance permet d'absorber une partie de l'énergie du choc.

Ces dispositifs fonctionnent de façon satisfaisante et offrent une protection adéquate pour les piétons.

Dans ce contexte, la présente invention a pour but d'améliorer encore la protection des piétons, en proposant un dispositif intégré au bloc optique permettant d'absorber encore mieux l'énergie dans la situation où la jambe d'un piéton heurte un bloc optique, et ce quelque soit la matière de l'aile jouxtant le bloc optique.

Un autre objectif de l'invention est de réduire la course de recul du bloc optique nécessaire pour absorber l'énergie d'un choc piéton, de façon à dégager un espace supplémentaire pour implanter d'autres équipements.

A cette fin, le dispositif de l'invention, par ailleurs conforme à la définition générique qu'en donne le préambule ci-dessus, est essentiellement caractérisé en ce que la glissière comprend une première portion sensiblement longitudinale dans laquelle la patte est normalement engagée, et une seconde portion inclinée prolongeant la première vers l'avant et le haut .

Dans un mode de réalisation possible de l'invention, la glissière est ménagée de matière dans un boîtier extérieur du bloc optique.

Le dispositif peut par ailleurs présenter une ou plusieurs des caractéristiques ci-dessous.
- Il comprend au moins trois glissières coopérant avec trois pattes correspondantes, une glissière étant par exemple ménagée d'un côté supérieur du boîtier, et deux d'un côté inférieur du boîtier.
- La patte comprend une partie allongée transversalement reposant au fond de la glissière, et un bloc de fixation faisant saillie hors de la glissière et rigidement fixé sur l'élément de structure.
- La glissière est délimitée par un fond et deux parois latérales mutuellement en regard, cette glissière comprenant deux rainures s'étendant sensiblement longitudinalement dans les deux parois latérales opposées, deux extrémités transversales opposées de la partie allongée de la patte étant engagées dans lesdites rainures.
- La partie allongée est délimitée d'un côté par une première face parallèle au fond de la première portion de la glissière, et vers l'avant par une seconde face parallèle au fond de la seconde portion de la glissière.
- La patte comprend une zone de moindre résistance mécanique, rendant la patte apte à se casser quand le bloc optique subit un choc d'énergie supérieure à une limite prédéterminée.
- La zone de moindre résistance est choisie de telle sorte que la patte se casse à la jonction entre la partie allongée et le bloc de fixation.
- La patte porte des moyens d'indexage du bloc optique par rapport à la structure du véhicule.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue de côté de l'avant d'un véhicule automobile et d'un impacteur jambe du type utilisé dans les essais de choc piéton, montrant les directions des impacts en cas de choc piéton jambe sur un bloc optique du véhicule,
- la figure 2 est une vue schématique en perspective montrant la position normale d'un bloc optique équipé d'un dispositif de fixation conforme à l'invention,
- la figure 3 est une vue similaire à celle de la figure 2, montrant l'état du dispositif de fixation après choc piéton sur le bloc optique, et
- la figure 4 est une vue en perspective agrandie d'une des pattes inférieures du dispositif de fixation de la figure 2.

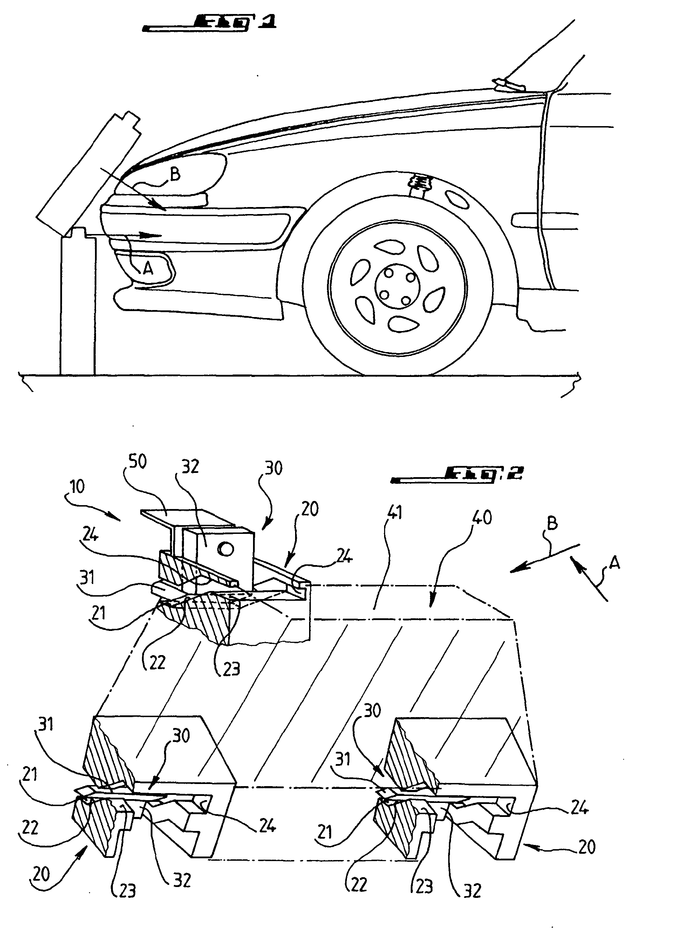

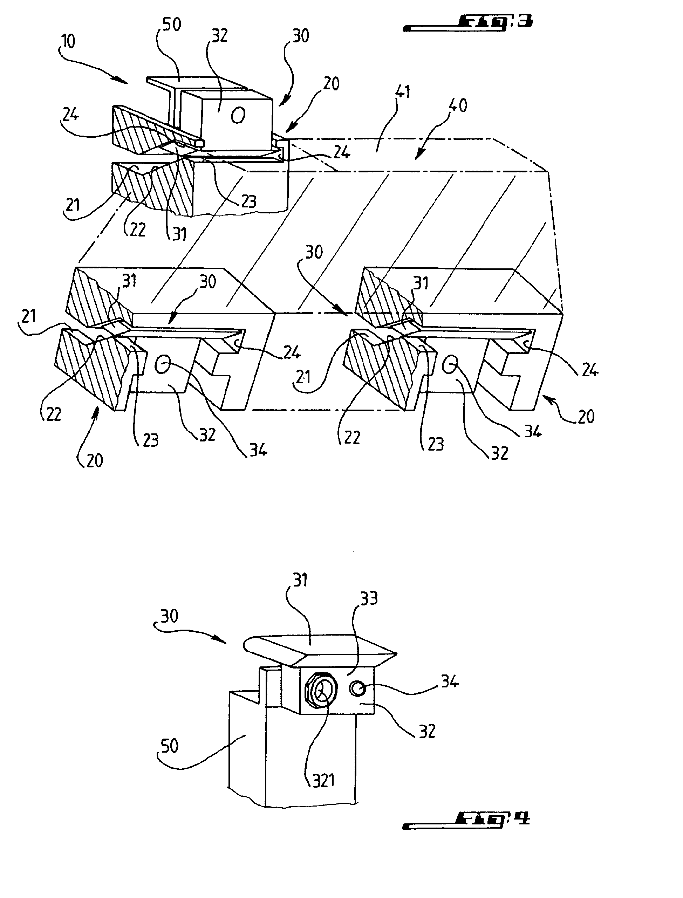

Le dispositif 10 représenté sur les figures 2 à 4 est destiné à la fixation d'un bloc optique 40 sur la structure d'un véhicule, à l'avant de ce véhicule.

Ce dispositif 10 comprend au moins une glissière 20 solidaire du bloc optique 40 et une patte 30 fixée sur un élément de structure 50 du véhicule et engagée dans la glissière 20.

Comme le montre la figure 1, en cas de choc piéton jambe sur l'avant du véhicule, la jambe du piéton peut venir impacter le bloc optique 40.

Le bloc optique 40 est apte à se déplacer longitudinalement vers l'arrière sous l'effet de ce choc, par glissement de la glissière 20 contre la patte 30.

Le glissement de la glissière 20 s'accompagne de frottements contre la patte 30, qui permettent de dissiper l'énergie du choc.

Selon l'invention, la glissière 20 comprend une première portion 21 rectiligne, sensiblement longitudinale, dans laquelle la patte 30 est normalement engagée, et une seconde portion inclinée 22, rectiligne, prolongeant la première vers l'avant et le haut .

Comme le montre la figure 2, la glissière 20 comprend une troisième portion 23 longitudinale prolongeant la seconde portion 22 vers l'avant à partir d'une extrémité de cette seconde portion 22 opposée à la première portion 21.

Les première et troisième portions 21 et 23 sont sensiblement horizontales, la troisième portion étant située relativement plus haut que la première.

En cas de choc piéton jambe sur le bloc optique 40, ce bloc subit d'abord un premier effort suivant une direction horizontale longitudinale, d'avant en arrière, correspondant à l'impact d'une partie inférieure de la jambe. Ce premier effort est suivi d'un second effort, orienté de l'avant vers l'arrière et du haut vers le bas, correspondant à l'impact d'une partie supérieure de la jambe. Ces deux efforts sont représentés respectivement par les flèches A et B des figures 1 et 2.

Les orientations respectives des première et seconde portions 21 et 22 de la glissière 20 sont avantageusement choisies parallèles aux directions des premier et second efforts subis par le bloc optique 40. Ainsi, sous l'effet du premier effort, la glissière 20 effectue un premier déplacement vers l'arrière au cours duquel la première portion 21 glisse contre la patte 30, la patte 30 se situant à la fin de ce premier déplacement sensiblement au point de jonction entre les première et seconde portions 21 et 22. Sous l'effet du second effort, la glissière 20 effectue un second déplacement, vers le bas et vers l'arrière, au cours duquel la seconde portion 22 glisse contre la patte 30, cette patte 30 se trouvant à la fin de ce déplacement au point de jonction entre les seconde et troisième portions 22 et 23, comme le montre la figure 3.

On voit sur les figures 2 et 3 que le dispositif comprend typiquement trois glissières 20 coopérant avec trois pattes 30 correspondantes, une glissière 20 étant ménagée par exemple d'un côté supérieur du bloc optique 40, et les deux autres d'un côté inférieur du bloc optique 40.

Les deux glissières 20 inférieures sont disposées de deux côtés transversaux opposés du bloc 40.

La glissière 20 supérieure s'ouvre vers le haut et les deux glissières 20 inférieures s'ouvrent vers le bas. Les trois glissières 20 sont mutuellement parallèles, et présentent des première, seconde et troisième portions de mêmes longueurs, de mêmes orientations et de mêmes caractéristiques mécaniques.

Les glissières 20 sont typiquement ménagées de matière dans un boîtier extérieur 41 du bloc optique 40, celui-ci étant généralement constitué de plastique, par exemple de polypropylène.

Il est possible de faire varier l'état de surface des matériaux constituant les pattes 30 et les glissières 20 de façon à diminuer ou augmenter les frottements entre ces éléments en cas de choc piéton. On peut ainsi réduire ou augmenter la course du bloc optique nécessaire pour absorber l'énergie du choc.

A cet effet, il est possible de faire varier la charge et le grain du polypropylène constituant les glissières. Il est également possible d'intégrer un insert métallique dans le boîtier 41, dans les parties constituant les fonds des glissières 20, et/ou de réaliser en métal au moins les parties des pattes 30 frottant sur lesdits fonds.

Tout autre moyen permettant de faire varier la dureté des parties des pattes et des glissières frottant l'une sur l'autre peut également être envisagé.

On va maintenant décrire en détail la constitution des pattes et des glissières, en référence aux figures 2 et 3.

La patte 30 comprend une partie 31 allongée transversalement reposant au fond de la glissière 20, et un bloc de fixation 32 faisant saillie hors de la glissière 20 et rigidement fixé sur l'élément de structure 50.

Le bloc de fixation 32 présente une forme sensiblement parallélépipédique, et s'étend sensiblement dans un plan vertical transversal. Le bloc 32 de la patte 30 engagée dans la glissière supérieure 20 s'étend vers le haut à partir de la partie allongée transversalement 31, et les blocs 32 des pattes 30 engagées dans les glissières inférieures 20 s'étendent vers le bas à partir des parties allongées 31 correspondantes.

Ces blocs 32 sont percés chacun par un orifice 321 destiné à recevoir une vis de fixation dudit bloc sur l'élément de structure 50, non représentée.

Chaque bloc 32 est rigidement fixé au centre de la partie allongée 31 correspondante, des extrémités transversales opposées de cette partie faisant saillie transversalement des deux côtés opposés du bloc 32.

Par ailleurs, chaque glissière 20 est délimitée par un fond et deux parois latérales verticales opposées mutuellement en regard, les deux parois latérales étant mutuellement parallèles et s'étendant perpendiculairement à la direction transversale.

Le fond s'étend horizontalement le long de la première portion 21, en oblique vers l'avant et le haut à partir de la première portion 21 le long de toute la seconde portion 22, et enfin horizontalement le long de la troisième portion 23.

Il est plat le long de chacune des portions.

La glissière 20 comprend deux rainures 24 s'étendant sensiblement longitudinalement dans les deux parois latérales opposées.

Ces rainures 24 sont creusées transversalement dans les parois latérales, et présentent chacune dans un plan vertical transversal une section typiquement rectangulaire, ouverte au niveau de la paroi latérale.

Les rainures 24 s'étendent au niveau du fond de la glissière 20, le long des première seconde et troisième portions 21 à 23 de celle-ci. Elles suivent le profil du fond de la glissière 20, et s'étendent horizontalement le long de la première portion 21, en oblique vers l'avant et le haut à partir de la première portion 21 le long de toute la seconde portion 22, et enfin horizontalement le long de la troisième portion 23.

Les deux extrémités transversales opposées de la partie allongée 31 de la patte 30 sont engagées dans lesdites rainures 24.

La partie allongée 31 présente une section en parallélogramme dans un plan vertical longitudinal perpendiculaire à la direction transversale.

Cette géométrie est particulièrement avantageuse. On voit en effet sur la figure 2 que la partie allongée 31 repose normalement par une première face sur le fond de la première portion 21 de la glissière 20, cette première face s'étendant dans un plan horizontal. La première face glisse sur le fond en cas de choc piéton, au cours du premier déplacement de la glissière 20.

Quand la partie allongée 31 arrive à la jonction entre les première et seconde portions 21 et 22, une seconde face de la partie inclinée 31 vient reposer sur le fond de la seconde portion 22. L'inclinaison entre les première et seconde faces de la partie allongée 31 correspond à l'inclinaison entre les fonds des première et seconde portions 21 et 22, de sorte que la seconde face se présente parallèlement au fond de la seconde portion 22.

La seconde face glisse le long du fond de la seconde portion 22 pendant le second déplacement de la glissière 20.

De préférence, la hauteur verticale des rainures 24 correspond à la hauteur verticale de la partie allongée 31, de telle sorte que celle-ci frotte à la fois sur le fond de la glissière et sur le côté de la rainure 24 opposé au fond.

Les pattes 30 comprennent chacune une zone 33 de moindre résistance mécanique, rendant la patte 30 apte à se casser quand le bloc optique 40 subit un choc d'énergie supérieure à une limite prédéterminée.

Cette limite prédéterminée correspond à l'énergie d'un choc piéton. Tout choc d'énergie supérieure à un choc piéton ne peut pas être amorti entièrement par le recul du bloc optique 40.

De façon à ne pas endommager l'élément de structure 50 sur lequel est fixée la patte 30, on prévoit que celle-ci peut casser pour un choc d'énergie supérieure à un choc piéton, d'autres moyens d'amortissement permettant alors d'absorber l'énergie de ce choc. Ces autres moyens d'amortissement sont en dehors du champ de la présente invention et ne sont pas décrits ici.

La zone de moindre résistance 33 est typiquement choisie de telle sorte que la patte 30 se casse à la jonction entre la partie allongée 31 et le bloc de fixation 32.

On notera enfin que les blocs de fixation 32 portent chacun des moyens d'indexage 34 du bloc optique 40 par rapport à la structure du véhicule.

Les trois blocs 32 sont indexés en X, c'est-à-dire longitudinalement, par mise en appui directement sur un élément de structure 50 du véhicule.

Un des deux blocs inférieurs 32 est indexé en Z, c'est-à-dire verticalement, les moyens d'indexage comprenant par exemple un trou oblong allongé transversalement ménagé sur l'élément de structure 50 et un ergot formé sur le bloc 32 correspondant et engagé dans le trou oblong.

L'autre bloc inférieur 32 est indexé en YZ, c'est-à-dire transversalement et verticalement, les moyens d'indexage comprenant par exemple un trou rond ménagé sur l'élément de structure 50 et un ergot sur le bloc 32 correspondant et engagé dans le trou rond.

On comprend bien que le dispositif de fixation décrit ci-dessus présente de multiples avantages.

Il permet un amortissement très efficace d'un choc piéton sur le bloc optique, et donc d'assurer un haut niveau de sécurité pour les piétons.

La course de recul du bloc est particulièrement courte du fait de l'efficacité de l'amortissement. On libère ainsi de l'espace à bord du véhicule pour loger d'autres équipements. En faisant participer le bloc optique à l'amortissement du choc piéton jambe, il devient possible de diminuer le porte-à-faux avant du véhicule, ce qui donne plus de libertés aux stylistes pour modeler l'avant du véhicule.

Les frottements générés par le glissement des glissières contre les pattes peuvent être modulés en jouant sur l'état de surface des matériaux employés et sur le choix des matériaux. On peut ainsi ajuster au cas par cas la course de recul du bloc optique, en fonction des caractéristiques du véhicule. Cet ajustement est effectué par des calculs, confirmés par des essais si nécessaire.

Les zones de moindre résistance prévues sur les pattes sont compatibles d'autres moyens d'amortissement en cas de choc d'énergie supérieure à un choc piéton, de façon à ne pas endommager la structure du véhicule.

Par ailleurs, les pattes peuvent être livrées prépositionnées dans les glissières du bloc optique chez le constructeur automobile, celui-ci n'ayant plus qu'à fixer ces pattes sur les éléments de structure correspondants.

Enfin, après un choc piéton, il est très facile de remettre en position le bloc optique chez un concessionnaire. Il suffit de repositionner correctement les glissières par rapport aux pattes. Ce dispositif permet de conserver le bloc optique intact après un choc piéton si les composants internes du bloc optiques sont suffisamment dimensionnés, tout en étant compatible avec l'amortissement d'un choc réparabilité, et sans imposer de contraintes du style sur le bloc optique ou de contrainte de matière sur l'aile jouxtant le bloc optique.

Le dispositif de fixation décrit ci-dessus peut faire l'objet de multiples variantes sans sortir du cadre de l'invention.

Il peut comprendre seulement une glissière, deux glissières, ou plus de trois glissières.

Les parties allongées des pattes peuvent présenter des sections qui ne sont pas en parallélogramme, sous réserve d'être chacune délimitée par une face inférieure horizontale et une face avant inclinée parallèlement au fond de la seconde portion de la glissière.

Les pattes peuvent être fixées sur la structure du véhicule non par des vis mais par tout autre moyen de fixation adapté. Elles peuvent aussi ne pas avoir d'éléments d'indexage.

On soulignera enfin que le nombre de glissières et l'orientation de ces rainures est fonction du type de choc à amortir. Ainsi, une seule glissière est suffisante pour amortir un choc piéton fémur, et deux ou trois glissières sont nécessaires pour amortir un choc piéton jambe, en fonction des hauteurs relatives de la jambe et du véhicule.

Afin d'éviter les arcs-boutements des trois blocs de fixation 32 dans une/les trois glissière(s) pendant le choc (répartition des efforts entre les trois blocs de fixation pas forcément homogènes), on peut imaginer qu'une, voire deux glissières, soient supprimées et remplacées par des fixations traditionnelles, fusibles en cas de choc piéton.

## Revendications

1. Dispositif de fixation (10) d'un bloc optique (40) sur la structure d'un véhicule automobile, ce dispositif comprenant au moins une glissière (20) solidaire du bloc optique (40) et une patte (30) fixée sur un élément de structure du véhicule (50) et engagée dans la glissière (20), le bloc optique (40) étant apte à se déplacer longitudinalement vers l'arrière en cas de choc sur l'avant du véhicule par glissement de la glissière (20) contre la patte (30), **caractérisé en ce que** la glissière (20) comprend une première portion (21) sensiblement longitudinale dans laquelle la patte (30) est normalement engagée, et une seconde portion inclinée (22) prolongeant la première vers l'avant et le haut.

2. Dispositif selon la revendication 1, **caractérisé en ce que** la glissière (20) est ménagée de matière dans un boîtier extérieur (41) du bloc optique (40).

3. Dispositif selon la revendication 1 ou 2, **caractérisé en ce qu**'il comprend au moins trois glissières (20) coopérant avec trois pattes (30) correspondantes, une glissière étant par exemple ménagée d'un côté supérieur du bloc optique (40), et deux d'un côté inférieur du bloc optique (40).

4. Dispositif selon l'une quelconque des revendications 1 à 3, **caractérisé en ce que** la patte (30) comprend une partie (31) allongée transversalement reposant au fond de la glissière (20), et un bloc de fixation (32) faisant saillie hors de la glissière (20) et rigidement fixé sur l'élément de structure (50).

5. Dispositif selon la revendication 4, **caractérisé en ce que** la glissière (20) est délimitée par un fond et deux parois latérales mutuellement en regard, cette glissière (20) comprenant deux rainures (24) s'étendant sensiblement longitudinalement dans les deux parois latérales opposées, deux extrémités transversales opposées de la partie allongée (31) de la patte (30) étant engagées dans lesdites rainures (24).

6. Dispositif selon la revendication 4 ou 5, **caractérisé en ce que** la partie allongée (31) est délimitée d'un côté par une première face parallèle au fond de la première portion (21) de la glissière (20), et vers l'avant par une seconde face parallèle au fond de la seconde portion (22) de la glissière (20).

7. Dispositif selon l'une quelconque des revendications 4 à 6, **caractérisé en ce que** la patte (30) comprend une zone (33) de moindre résistance mécanique, rendant la patte (30) apte à se casser quand le bloc optique (40) subit un choc d'énergie supérieure à une limite prédéterminée.

8. Dispositif selon la revendication 7, **caractérisé en ce que** la zone (33) de moindre résistance est choisie de telle sorte que la patte (30) se casse à la jonction entre la partie allongée (31) et le bloc de fixation (32).

9. Dispositif selon l'une quelconque des revendications précédentes, **caractérisé en ce que** la patte (30) porte des moyens (34) d'indexage du bloc optique (40) par rapport à la structure du véhicule.

## Claims

1. Fixing device (10) for a lighting unit (40) onto the structure of a motor vehicle, this device comprising at least one slide (20) joined to the lighting unit (40) and a lug (30) fixed to a structural element of the vehicle (50) and engaged in the slide (20), the lighting unit (40) being able to move longitudinally towards the rear in the event of impact on the front of the vehicle via sliding of the slide (20) against the lug (30), **characterized in that** the slide (20) comprises a first substantially longitudinal portion (21) in which the lug (30) is normally engaged, and a second inclined portion (22) extending the first portion forwards and upwards.

2. Device as in claim 1, **characterized in that** the slide (20) is made in one piece with an outer casing (41) of the lighting unit (40).

3. Device as in claim 1 or 2, **characterized in that** it comprises at least three slides (20) cooperating with three corresponding lugs (30), one slide being arranged for example on an upper side of the lighting unit (40) and two on a lower side of the lighting unit (40).

4. Device as in any of claims 1 to 3, **characterized in that** the lug (30) comprises an elongate part (31) lying crosswise on the bottom of the slide (20), and an attachment unit (32) projecting out of the slide (20) and rigidly attached to the structural element (50).

5. Device as in claim 4, **characterized in that** the slide (20) is delimited by a base and two side walls lying mutually opposite one another, this slide (20)comprising two grooves (24) extending substantially longitudinally into the two opposite side walls, two opposite cross ends of the elongate part (31) of the lug (30) being engaged in said grooves (24).

6. Device as in claim 4 or 5, **characterized in that** the elongate part (31) is delimited on one side by a first face parallel to the base of the first portion (21) of the slide (20), and forwardly by a second face parallel to the base of the second portion (22) of the slide (20).

7. Device as in any of claims 4 to 6, **characterized in that** the lug (30) comprises an area (33) of lesser mechanical resistance, allowing the lug (30) to break when the lighting unit (40) undergoes an impact of greater energy than a pre-determined limit.

8. Device as in claim 7, **characterized in that** the area (33) of lesser resistance is chosen so that the lug (30) breaks at the junction between the elongate part (31) and the attachment unit (32).

9. Device as in any of the preceding claims, **characterized in that** the lug (30) carries indexing means (34) for the lighting unit (40) with respect to the structure of the vehicle.

## Patentansprüche

1. Vorrichtung zur Befestigung (10) eines Scheinwerfereinsatzes (40) auf der Struktur eines Kraftfahrzeugs, wobei diese Vorrichtung mindestens eine mit dem Scheinwerfereinsatz (40) verbundene Gleitschiene (20) und eine auf einem Strukturelement des Fahrzeugs (50) befestigte und in die Gleitschiene (20) eingreifende Klaue (30) umfasst, wobei der Scheinwerfereinsatz (40) in der Lage ist, sich bei einem Stoß auf die Fahrzeugfront durch Gleiten der Gleitschiene (20) längs nach hinten gegen die Klaue (30) zu verschieben, **dadurch gekennzeichnet, dass** die Gleitschiene einen etwa längs verlaufenden ersten Abschnitt (21) umfasst, in den die Klaue (30) normalerweise eingreift, und einen zweiten geneigten Abschnitt (22), der den ersten Abschnitt nach vorn und oben verlängert.

2. Vorrichtung nach Anspruch 1, **dadurch gekennzeichnet, dass** die Gleitschiene (20) in ein Außengehäuse (41) des Scheinwerfereinsatzes (40) eingearbeitet ist.

3. Vorrichtung nach Anspruch 1 oder 2, **dadurch gekennzeichnet, dass** sie mindestens drei Gleitschienen (20) umfasst, die mit drei entsprechenden Klauen (30) zusammenwirken, wobei eine Gleitschiene zum Beispiel in eine Oberseite des Scheinwerfereinsatzes (40) eingearbeitet ist und zwei in eine Unterseite des Scheinwerfereinsatzes (40).

4. Vorrichtung nach einem der Ansprüche 1 bis 3, **dadurch gekennzeichnet, dass** die Klaue (30) einen transversal verlängerten Teil (31) umfasst, der sich auf dem Boden der Gleitschiene (20) abstützt, und einen Befestigungsblock (32), der über die Gleitschiene (20) hinausragt und auf dem Strukturelement (50) starr befestigt ist.

5. Vorrichtung nach Anspruch 4, **dadurch gekennzeichnet, dass** die Gleitschiene (20) durch einen Boden und zwei Seitenwände, die sich gegenüberstehen, begrenzt wird, wobei diese Gleitschiene (20) zwei Rillen (24) umfasst, die sich etwa längs in den zwei gegenüberliegenden Seitenwänden erstrecken, wobei zwei transversale, dem verlängerten Teil (31) der Klaue (30) gegenüberliegende Enden in die besagten Rillen (24) eingreifen.

6. Vorrichtung nach Anspruch 4 oder 5, **dadurch gekennzeichnet, dass** der verlängerte Teil (31) auf der einen Seite von einer ersten, zum Boden des ersten Abschnitts (21) der Gleitschiene (20) parallel verlaufenden Fläche begrenzt wird, und nach vorn von einer zweiten, zum Boden des zweiten Abschnitts (22) der Gleitschiene (20) parallel verlaufenden Fläche begrenzt wird.

7. Vorrichtung nach einem der Ansprüche 4 bis 6, **dadurch gekennzeichnet, dass** die Klaue (30) einen Bereich (33) geringerer mechanischer Widerstandsfähigkeit umfasst, wodurch die Klaue (30) zerbrechbar wird, wenn der Scheinwerfereinsatz (40) einem Energiestoß über einer vorbestimmten Grenze ausgesetzt wird.

8. Vorrichtung nach Anspruch 7, **dadurch gekennzeichnet, dass** der Bereich (33) mit der geringeren Widerstandsfähigkeit derart ausgewählt wird, dass die Klaue (30) an der Verbindung zwischen dem verlängerten Teil (31) und dem Befestigungsblock (32) zerbricht.

9. Vorrichtung nach einem der vorhergehenden Ansprüche, **dadurch gekennzeichnet, dass** die Klaue (30) Mittel (34) zur Positionierung des Scheinwerfereinsatzes (40) in bezug auf die Fahrzeugstruktur trägt.
